# EUROPÄISCHE PATENTSCHRIFT

(11) **EP 2 318 762 B1**
(45) Veröffentlichungstag und Bekanntmachung des Hinweises auf die Patenterteilung: **27.02.2013**
(21) Anmeldenummer: 09775872.6
(22) Anmeldetag: 12.05.2009
(51) Int. Cl.: F23C 13/02, F23D 14/64, F23D 14/66, F23N 1/02

(54) **VORRICHTUNG ZUM KONTINUIERLICHEN VORWÄRMEN EINES GEMISCHES AUS BRENNGAS, INSBESONDERE ERDGAS UND SAUERSTOFF**
DEVICE FOR CONTINUOUSLY PREHEATING A MIXTURE OF BURNABLE GAS, PARTICULARLY NATURAL GAS AND OXYGEN
DISPOSITIF POUR LE PRÉCHAUFFAGE CONTINU D'UN MÉLANGE CONSTITUÉ DE GAZ COMBUSTIBLE, EN PARTICULIER DE GAZ NATUREL, ET D'OXYGÈNE

(30) Priorität: 04.08.2008 DE 102008036270
(43) Veröffentlichungstag der Anmeldung: 11.05.2011
(73) Patentinhaber: EWE GASSPEICHER GmbH, 26122 Oldenburg (DE)
(72) Erfinder: LENK, Andreas, 26203 Wardenburg (DE)
(74) Vertreter: Siekmann, Gunnar
(86) Internationale Anmeldenummer: PCT/DE2009/000667
(87) Internationale Veröffentlichungsnummer: WO 2010/015216

(56) Entgegenhaltungen:
- EP-A1- 0 920 578

## Beschreibung

Die Erfindung betrifft eine Vorrichtung mit den Merkmalen des Oberbegriffs des Patentanspruchs 1. Eine Vorrichtung zum kontinuierlichen Vorwärmen eines Gemisches aus Brenngas, insbesondere Erdgas und Sauerstoff vor seiner katalytischen Verbrennung wird beschrieben, mit deren Verbrennungswärme ausgespeichertes Erdgas vor oder nach seiner Entspannung und Zuleitung zu Verbrauchern, zum Ausgleich des Joule-Thomson-Effektes erwärmbar ist.

Eine Vorrichtung der vorbezeichneten Gattung ist nach der EP 0 920 578 bekannt.

Bei dem mit der bekannten Vorrichtung durchgeführten Verfahren werden durch katalytische Umsetzung von Sauerstoff mit Erdgas in stark unterstöchiometrischem Mischungsbereich am Katalysator, direkt im Gastrom, Temperaturen von bis zu 400°Celsius erreicht.

Grundsätzlich kann das Selbstzünden bei einer direkten Zugabe von Sauerstoff in Brenngase nie ganz ausgeschlossen werden. Durch Wahl der Paraeter Druck, Temperatur und Konzentration, kann das Risiko unerwünschter Selbstzündungen jedoch vermindert werden.

Die katalytische Verbrennung erfordert eine Katalysator-Aktivierungstemperatur von etwa 180°Celsius bis 250°Celsius. Die Vorwärmung von Erdgas-Sauerstoffgemischen auf diese Katalysator-Aktivierungstemperatur ist in Bezug auf die Selbstzündung bei den herrschenden hohen Drücken vor der Entspannung technisch nicht umzusetzen. Eine sichere Ausspeicherung des Erdgases ist nicht möglich.

Die Selbstzündung von Erdgas-Sauerstoffgemischen ist druck- und temperaturbhängig und somit führt eine erhöhte Sauerstoffkonzentration bereits zum Verbrennen im Gasstrom und damit zu einer Druck- und Temperaturerhöhung auch ohne Katalysator. Dies ist von Nachteil, da der Verbrennungsvorgang dann nicht kontrollierbar ist.

Das ausgespeicherte Erdgas-Sauerstoffgemisch weist vor Eintritt in den katalytischen Reaktor eine Temperatur von etwa 5°Celsius bis 30°Celsius auf und ist somit recht kalt und liegt weit außerhalb des Bereiches der erforderlichen Aktivierungstemperatur. Der gewünschte Verbrennungsprozeß gerät deshalb schon nach kurzer Zeit aus dem Gleichgewicht. Bei Unterschreitung der Aktivierungstemperatur wird der Reaktor "kaltgeblasen" und der Sauerstoff verbleibt im Erdgas, ohne umgesetzt worden zu sein.

Der Erfindung liegt die Aufgabe zugrunde, eine Vorrichtung bereitzustellen, die eine sichere Vorwärmung und dadurch einen stabilen Prozeß der katalytischen Umsetzung von Sauerstoff und Brenngas ermöglicht.

Diese Aufgabe ist durch die Merkmale des Patentanspruches 1 gelöst. Weiterbildungen und vorteilhafte Ausgestaltungen ergeben sich aus den Unteransprüchen 2 bis 7.

In erfindungsgemäßer Weise ist die Vorrichtung als Strahlpumpe ausgebildet, deren Funktion darin besteht, dem ausgespeicherten kalten Erdgasstrom, der Temperaturen von 5°Celsius bis 30°Celsius aufweist, durch das Erzeugen eines Unterdruckes in der Mischkammer der Strahlpumpe warmes Erdgas aus dem Reaktor, das zum Beispiel Temperaturen von 250°Celsius bis 400°Celsius aufweist, einzudosieren. Diese Funktion der erfindungsgemäßen Eindosierung erfolgt mit besonderem Vorteil temperaturgeregelt und bewirkt, den Katalysator für die nachfolgende Reaktion zwischen Erdgas und Sauerstoff nicht aus der aktiven Temperatur von mindestens 180°Celsius herauszublasen.

Dies ist dadurch gewährleistet, daß die Treibdüse und die Fangdüse relativ zueinander beweglich im Pumpengehäuse, und zwar in dessen Mischkammer, angeordnet sind, wobei ein Stellmechanismus für eine von der Temperatur des durch den Austritt aus der Mischkammer abströmenden Gasgemisches abhängige Verstellung des Abstandes zwischen Treibdüse und Fangdüse sorgt.

Dadurch, daß der Stellmechanismus wenigstens einen am Gehäuse abgestützten Arbeitszylinder aufweist, dessen Kolbenstange an der längs einer Führung stellbeweglich geführten Fangdüse angeordnet ist, wird der Abstand zwischen Treibdüse und Fangdüse verändert.

An die Mischkammer der Strahlpumpe ist eine Saugleitung angeschlossen, die durch den katalytischen Verbrennungsprozeß bereits erwärmtes Erdgas in die Mischkammer saugt. Das erwärmte Erdgas hat die erforderliche Temperatur von 250°Celsius bis 400°Celsius und wird in der Mischkammer mit dem kalten Erdgas-Sauerstoffgemisch verwirbelt und vermischt, wobei sich das Gemisch auf eine vorbestimmte, jeweils gewünschte Temperatur erwärmt und letztlich durch den Austritt aus der Mischkammer als vorgewärmtes Gasgemisch abströmt. Dieses vorgewärmte Gasgemisch wird dann anschließend wieder der katalytischen Verbrennung unterzogen, von der wiederum, wie bereits beschrieben, über die Saugleitung fortlaufend ein warmer Teilgasstrom abgezweigt wird.

Gemäß einer vorteilhaften Weiterbildung der Erfindung ist die Fangdüse ein hohlzylinderförmiges Teil, welches auf der Mündung eines aus der Mischkammer und aus dem Gehäuse hinausführenden Rohres für den Austritt des nunmehr vorgewärmten Gasgemisches längs verschiebbar geführt gehalten ist.

Aus der Längsverschiebbarkeit ergibt sich der Stellweg der Fangdüse gegenüber der Treibdüse, die stationär, also ortsfest, in das Gehäuse eingesetzt ist.

Über ein Regelventil, das, in Abhängigkeit der mittels Meßfühlern ermittelten Temperatur des durch den Austritt strömenden Gasgemisches, auf drei am Umfang der Fangdüse angeordnete Arbeitszylinder wirkt, kann die Fangdüse, somit temperaturgeregelt, so bewegt werden, daß sie der Treibdüse angenähert oder davon weiter entfernt wird. Hierdurch ist es möglich, die Temperatur des die Mischkammer über den Austritt verlassenden Gasgemisches stufenlos zu regeln.

Durch in den Zylinderraum der Arbeitszylinder eingebaute Rückholfedern werden die Kolben der Arbeitszylinder stets in ihre Endlage zurückgedrückt. Bei voll geöffnetem Regelventil zum Ansteuern der Kolben, rückt die Fangdüse bis an die Treibdüse heran, so daß dann nur relativ kaltes Erdgas in den Austritt der Vorrichtung gelangen kann und den Katalysator erreicht, um diesen zu deaktivieren bzw. "kaltzublasen".

Das zur Steuerung der Fangdüse benutzte Druckmedium ist Erdgas, welches aus dem Hauptstrom des Erdgases zum erwärmenden Reaktor abgezweigt wird und zwar vor einem entsprechenden Regelventil im Bereich des Eintritts in den Reaktor, in dem die katalytische Verbrennung des Erdgases zwecks seiner Erwärmung erfolgt. An dieser Abzweigstelle steht immer ein ausreichend hoher Druck zur Ansteuerung der Kolben unter Kontrolle der Steuer - und Regeleinrichtung zur Verfügung.

Das Gas, welches zum Ansteuern der Kolben benutzt wird, kann durch entsprechende Wahl von Passungen zwischen Kolben und Zylinderwand ebenfalls in die Mischkammer der als Strahlpumpe ausgebildeten Vorrichtung abströmen.

Bei geschlossenem Regelventil erfolgt so durch derartige "Leckverluste" ein Druckausgleich und durch die eingebauten Rückholfedern in den Zylindern werden die Kolben in die ursprüngliche Stellung gedrückt.

Die Vorrichtung ermöglicht in vorteilhafter Weise ein Vorwärmen des Gasgemisches vor seiner Einleitung in den Reaktor sowie auch ein kontrolliertes "Kaltblasen" des katalytischen Reaktors, in dem die Erwärmung des gesamten, ausgespeicherten Erdgases erfolgt, wobei letztendlich durch Zumischung der mittels im Reaktor freigesetzten Wärme auf etwa 250°Celsius bis 400°Celsius erwärmten Gasgemisches zum ausgespeicherten Erdgasstrom letzter kontinuierlich erwärmt wird, um den bei der Entspannung auftretenden Joule-Thomson-Effekt auszugleichen.

Die Vorrichtung bewirkt auch eine vorteilhafte Verdünnung des Sauerstoff-Erdgasgemisches in einen Bereich, der mit Sicherheit unter der Selbstzündung liegt, womit die Handhabung der katalytischen Verbrennung erheblich sicherer ist.

Durch die stufenlose Regelbarkeit des Abstandes zwischen Treibdüse und Fangdüse ist eine kontrollierte Selbsterhaltung der katalytischen Reaktion bei der nachfolgenden Verbrennung des Erdgas-Sauerstoffgemisches möglich.

Zusätzliche Antriebe, Gebläse oder dergleichen sind bei der erfindungsgemäßen Vorrichtung nicht erforderlich, da sie durch das zur Verfügung stehende ausgespeicherte Erdgas, also durch Eigenmedium, gesteuert wird.

Ein Ausführungsbeispiel der Erfindung, aus dem sich weitere erfinderische Merkmale ergeben, ist in der Zeichnung dargestellt. Es zeigen:
- Fig. 1:: eine Seitenansicht der Vorrichtung im Schnitt, und
- Fig. 2:: die Eingliederung der Vorrichtung in ein Verfahren zur Nutzung der Verbrennungswärme der katalytischen Verbrennung eines Gemisches aus Erdgas und Sauerstoff in Form eines Fließdiagramms.

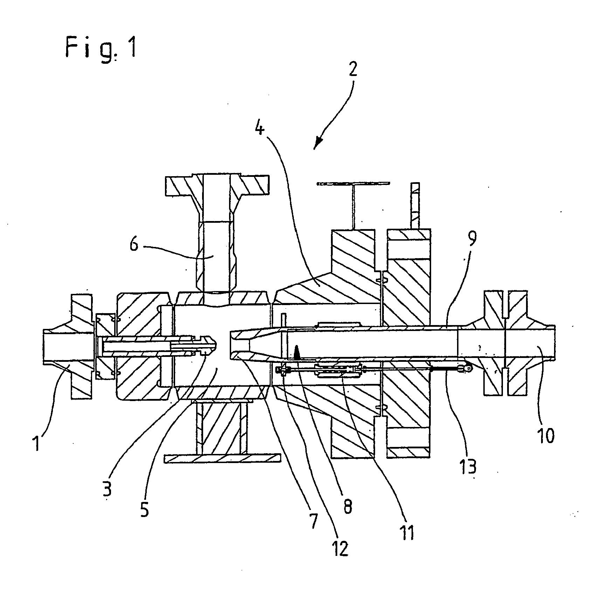

Fig. 1 zeigt eine Seitenansicht der Vorrichtung zum kontinuierlichen Vorwärmen eines Gemisches aus Brenngas, insbesondere Erdgas und Sauerstoff, im Schnitt.

Das Gemisch aus Erdgas und Sauerstoff wird in einem hier nicht weiter dargestellten Mischbehälter 18 bereitgestellt und strömt mit dem der Ausspeicherung entsprechenden hohen Druck der Vorrichtung über den Eingangsanschluß 1 zu. Die Vorrichtung ist als Strahlpumpe 2 ausgebildet, die eine Treibdüse 3 aufweist, über die das zugeführte Gemisch aus Erdgas und Sauerstoff in eine im Pumpengehäuse 4 befindliche Mischkammer 5 gedrückt wird.

An die Mischkammer ist eine Saugleitung 6 angeschlossen, über die ein Teilstrom des bereits in einem Reaktor 15 erwärmten Erdgases in die Mischkammer 5 gesaugt werden kann, wenn die Treibdüse in die mit ihr fluchtende, ihr gegenüberstehende Fangdüse 7 strahtt.

Die Fangdüse ist ein hohlzylinderförmiges Teil, welches auf der Mündung 8 eines aus der Mischkammer 5 und aus dem Gehäuse 4 herausführenden Rohres 9 für den Austritt 10 des in der Mischkammer 5 vorgewärmten Gemisches längsverschiebbar geführt gehalten ist.

Die Strahlpumpe 2 weist einen Stellmechanismus für eine von der Temperatur des durch den Austritt aus der Mischkammer 5 abströmenden Gasgemisches abhängige Verstellung des Abstandes zwischen Treibdüse 3 und Fangdüse 7 auf. Der Stellmechanismus umfaßt mehrere am Gehäuse 4 abgestützte Arbeitszylinder, von denen der hier sichtbare Arbeitszylinder 11 lediglich dargestellt ist. Die Kolbenstange 12 des Arbeitszylinders 11 ist an der längs ihrer Führung am Rohr 9 stellbeweglich geführten Fangdüse 7 im Anlenkpunkt 12 angelenkt.

Jeder Arbeitszylinder 11 weist einen Anschluß für eine mittels einer hier nicht weiter dargestellten Steuer- und Regeleinrichtung kontrollierte Zuleitung von Druckmedium auf.

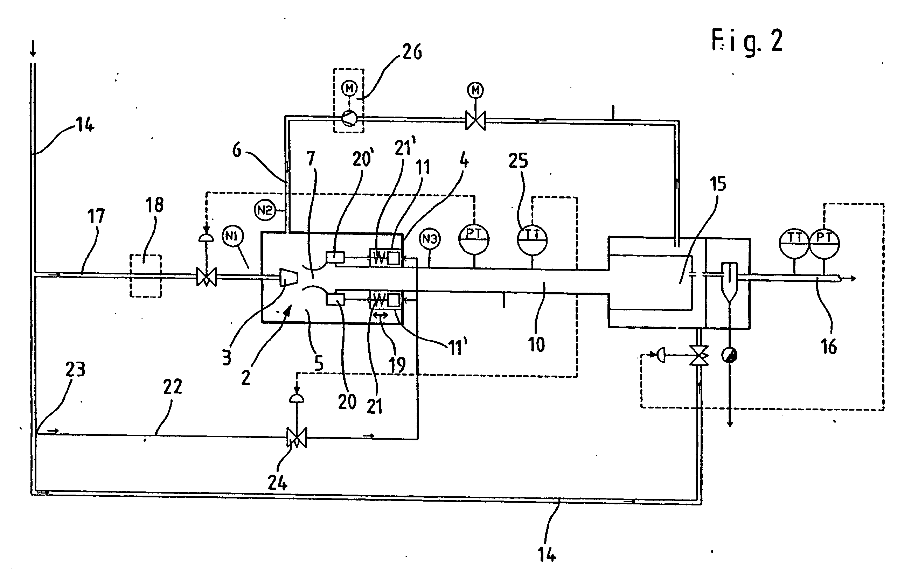

Fig. 2 zeigt ein Fließdiagramm und verdeutlicht die Anordnung der Vorrichtung gemäß Fig. 1 innerhalb einer Einrichtung zur Erwärmung von ausgespeichertem Erdgas vor oder nach seiner Entspannung und Einleitung in ein Versorgungsnetz. Das ausgespeicherte Erdgas strömt über die Hauptleitung 14 über ein Regelventil in den Ringraum des Reaktors 15, in dem es erwärmt wird, bevor es in die Versorgungsleitung 16 abströmt. In dem Reaktor 15 erfolgt eine Verbrennung einer Gasmischung aus Erdgas und einem Erdgas-Sauerstoff-Gemisch.

Das Erdgas für diese zu verbrennende Gasmischung wird dem Hauptstrom 14 über die Teilstromleitung 17 abgezweigt und in dem Mischbehälter 18 mit dem erforderlichen Sauerstoff angereichert, bis das notwendige Mischungsverhältnis (z.B. 3 MOL %) erreicht ist. Das Gemisch aus Erdgas und Sauerstoff tritt über die Treibdüse 3 in die Mischkammer 5 ein. In Verbindung mit der Fangdüse 7 wird in der Mischkammer 5 ein Unterdruck erzeugt, der bewirkt, daß über die Saugleitung 6 warmes Erdgas aus dem Reaktor 15 herangeführt wird. Dieses wird dem kalten Erdgasstrom, der über die Treibdüse 3 eingeblasen wird, beigemischt und die so erwärmte bzw. vorgewärmte Mischung strömt über den Austritt 10 aus der Mischkammer 5 in den Reaktor 15. Die dort erfolgende katalytische Verbrennung setzt Wärme frei, mit der wiederum das über die Hauptleitung 14 zugeführte ausgespeicherte Erdgas durch kontinuierliche Beimischung erwärmt wird, bevor es über die Leitung 16 einer Station zugeführt wird, in der es entspannt wird, beispielsweise auf einem in einer Versorgungsleitung herrschenden, verhältnismäßig niedrigen Druck.

Der Stellmechanismus für die Fangdüse 7 ist hier schematisch angedeutet. Die Längsverschiebung ist symbolisch durch den Doppelpfeil 19 angedeutet.

Die hier eingezeichneten Arbeitszylinder des Stellmechanismus 11 und 11' stützen sich am Pumpengehäuse 4 ab. Die Kolbenstangen 20 der Arbeitszylinder sind, wie es hier angedeutet ist, an der Fangdüse 7 bei 20 bzw. 20' angelenkt.

Mit 21 und 21' sind Rückholfedern bezeichnet.

Für die Zuleitung von Druckmedium zu den Arbeitszylindern 11, 11' ist eine Zweigleitung 22 vorgesehen, die in dem Abzweigpunkt 23 an die Hauptleitung 14 für ausgespeichertes Erdgas angeschlossen ist.

Eine Steuer- und Regeleinrichtung umfaßt ein Regelventil 24 und einen Temperaturmeßfühler 25, der die Temperatur des dem Reaktor 15 über den Austritt 10 zuströmenden, vorgewärmten Gasgemisches mißt und das Regelventil 24 so beeinflußt, daß es weiter öffnet oder schließt, wodurch den Arbeitszylindern über die Zweigleitung 22 mehr oder weniger Druckmedium zugeführt wird. Durch diese Zuführung von Druckmedium über die Zweigleitung 22 ergibt sich eine temperaturabhängige Längsverschiebebewegung der Fangdüse 7 auf dem Rohr des Austritts 10.

Die Saugwirkung der Strahlpumpe läßt sich durch ein zusätzliches Fördermittel 26 noch steigern bzw. beeinflussen.

## Patentansprüche

1. Vorrichtung zum kontinuierlichen Vorwärmen eines Gemisches aus Brenngas und Sauerstoff, vor seiner katalytischen Verbrennung und Entspannung und Zuleitung zu Verbrauchern, zum Ausgleich des Joule-Thomson-Effektes,
**dadurch gekenzeichnet,**
daß die Vorrichtung als eine Strahlpumpe (2) mit einer Treibdüse (3) und einer damit fluchtenden Fangdüse (7) ausgebildet ist,
daß die Treibdüse (3) der Einlaß für das Gemisch in eine im Pumpengehäuse (4) angeordnete Mischkammer (5) ist,
daß an die Mischkammer (5) eine Saugleitung (6) für mittels der katalytischen Verbrennung erwärmtes Brenngas angeschlossen ist,
daß die Fangdüse (7) ein Teil eines Austritts (8) der Mischkammer (5) der Strahlpumpe ist,
daß die Treibdüse (3) und die Fangdüse (7) relativ zueinander beweglich im Pumpengehäuse (4) angeordnet sind, und
daß sie einen Stellmechanismus für eine von der Temperatur des durch den Austritt aus der Mischkammer (5) abströmenden Gasgemisches abhängige Verstellung des Abstandes zwischen Treibdüse (3) und Fangdüse (7) aufweist.

2. Vorrichtung nach Anspruch 1, **dadurch gekennzeichnet, daß** der Stellmechanismus wenigstens einen am Pumpengehäuse (4) abgestützten Arbeitszylinder (11, 11') aufweist, dessen Kolbenstange an der längs einer Führung stellbeweglich geführten Fangdüse (7) angelenkt ist.

3. Vorrichtung nach Anspruch 2, **dadurch gekennzeichnet, daß** jeder Arbeitszylinder (11, 11') eine Rückholfeder (21, 21') aufweist.

4. Vorrichtung nach einem der Ansprüche 1 bis 3, **dadurch gekennzeichnet, daß** die Fangdüse (7) ein hohlzylinderförmiges Teil ist, welches auf der als Führung ausgebildeten Mündung (8) eines aus der Mischkammer (5) und aus dem Pumpengehäuse (4) herausführenden Rohres (10) für den Austritt des vorgewärmten Gemisches, längsverschiebbar geführt gehalten ist.

5. Vorrichtung nach einem der Ansprüche 1 bis 4, **dadurch gekennzeichnet, daß** jeder Arbeitszylinder (11, 11') einen Anschluß für eine mittels einer Steuer - und Regeleinrichtung kontrollierte Zuleitung von Druckmedium aufweist.

6. Vorrichtung nach Anspruch 5, **dadurch gekennzeichnet, daß** für die Zuleitung von Druckmedium eine Zweigleitung (22) vorgesehen ist, die von einer Hauptleitung (14) für ausgespeichertes Brenngas abgezweigt ist.

7. Vorrichtung nach einem der vorhergehender Ansprüche, **dadurch gekennzeichnet, daß** als Brenngas Erdgas vorgesehen ist.

## Claims

1. A device for continuously preheating a mixture of combustible gas and oxygen, before the catalytic combustion and expansion and feeding thereof to consumers, to compensate the Joule-Thomson effect,
**characterised in that**
the device is formed as a jet pump (2) having a propellant nozzle (3) and a collection nozzle (7) which is aligned therewith,
the propellant nozzle (3) is the inlet for the mixture into a mixing chamber (5) arranged in the pump housing (4),
a suction line (6) is connected to the mixing chamber (5) for combustion gas heated by means of the catalytic combustion,
the collection nozzle (7) is part of the outlet (8) of the mixing chamber (5) of the jet pump,
the propellant nozzle (3) and the collection nozzle (7) are arranged in the pump housing (4) such that they can move relative to each other,
and they have an actuation mechanism for a gas mixture for adjustment of the distance between the propellent nozzle (3) and the collection nozzle (7), which adjustment depends on the temperature of the gas mixture flowing through the outlet out of the mixing chamber (5).

2. The device according to Claim 1, **characterised in that** the actuation mechanism has at least one working cylinder (11, 11') which is supported on the pump housing (4) and the piston rod of which is hinged to the collection nozzle (7) which is guided in an adjustably movable manner along a guide.

3. The device according to Claim 2, **characterised in that** each working cylinder (11, 11') has a recoil spring (21, 21').

4. The device according to one of Claims 1 to 3, **characterised in that** the collection nozzle (7) is a hollow cylindrical part, which is held in a longitudinally displaceably guided manner on the opening (8), which is formed as a guide, of a tube (10) for the exit of the preheated mixture, which leads out of the mixing chamber (5) and out of the pump housing (4).

5. The device according to one of Claims 1 to 4, **characterised in that** each working cylinder (11, 11') has a connection for a supply of pressure medium controlled by means of a control and regulation means.

6. The device according to Claim 5, **characterised in that** a branch line (22) is provided for the supply of pressure medium, which line branches off from a main line (14) for withdrawn combustion gas.

7. The device according to one of the preceding claims, **characterised in that** natural gas is provided as the combustion gas.

## Revendications

1. Dispositif de préchauffage continu d'un mélange constitué de gaz combustible et d'oxygène, avant sa combustion catalytique et sa décompression et son introduction dans les appareils consommateurs, afin de compenser l'effet Joule-Thomson, **caractérisé en ce que** le dispositif est réalisé comme une pompe d'injection (2) comportant une tuyère de propulsion (3) et une tuyère réceptrice (7) s'alignant avec celle-ci, **en ce que** la tuyère de propulsion (3) constitue l'admission pour le mélange dans une chambre de mélange (5) disposée dans le carter de pompe (4), **en ce que** une conduite d'aspiration (6) pour le gaz combustible réchauffé au moyen de la combustion catalytique est raccordée à la chambre de mélange (5), **en ce que** la tuyère réceptrice (7) constitue une partie d'une sortie (8) de la chambre de mélange (5) de la pompe d'injection, **en ce que** la tuyère de propulsion (3) et la tuyère réceptrice (7) sont disposées de manière mobile l'une par rapport à l'autre dans le carter de pompe (4), et **en ce que** il présente un mécanisme de réglage pour l'ajustement, en fonction de la température du mélange de gaz s'écoulant hors de la chambre de mélange (5) à travers la sortie, de l'espacement entre la tuyère de propulsion (3) et la tuyère réceptrice (7).

2. Dispositif selon la revendication 1, **caractérisé en ce que** le mécanisme de réglage présente au moins un cylindre de travail (11,11') appuyé sur le carter de pompe (4), dont la tige de piston est raccordée par une articulation à la tuyère réceptrice (7) guidée avec une mobilité réglable le long d'une glissière.

3. Dispositif selon la revendication 2, **caractérisé en ce que** chaque cylindre de travail (11,111') présente un ressort de rappel (21,21').

4. Dispositif selon une des revendications 1 à 3, **caractérisé en ce que** la tuyère réceptrice (7) est une pièce en forme de cylindre creux, qui est maintenue, de manière déplaçable longitudinalement sur l'embouchure (8) réalisée comme une glissière d'un tuyau (10) ressortant de la chambre de mélange (5) et du carter de pompe (4) pour l'évacuation du mélange préchauffé.

5. Dispositif selon une des revendications 1 à 4, **caractérisé en ce que** chaque cylindre de travail (11,11') présente un raccord pour une conduite d'amenée d'un milieu pressurisé contrôlé au moyen d'un dispositif de commande et de régulation.

6. Dispositif selon la revendication 5, **caractérisé en ce que** une conduite dérivée (22) est prévue pour la conduite d'amenée d'un milieu pressurisé, laquelle conduite dérivée bifurque d'une conduite principale (14) pour le gaz combustible stocké.

7. Dispositif selon une des revendications précédentes, **caractérisé en ce que** du gaz naturel est prévu comme gaz de combustion.
